# EUROPÄISCHE PATENTSCHRIFT

(11) **EP 0 390 881 B1**
(45) Veröffentlichungstag und Bekanntmachung des Hinweises auf die Patenterteilung: **27.10.1993**
(21) Anmeldenummer: 89909151.6
(22) Anmeldetag: 16.08.1989
(51) Int. Cl.: F02M 59/46

(54) **DRUCKVENTIL**
DELIVERY VALVE
SOUPAPE DE REFOULEMENT

(30) Priorität: 09.09.1988 DE 3830736; 24.12.1988 DE 3843819
(43) Veröffentlichungstag der Anmeldung: 10.10.1990
(73) Patentinhaber: ROBERT BOSCH GMBH, 70442 Stuttgart (DE)
(72) Erfinder: BOFINGER, Guenter, D-7143 Vaihingen/Enz (DE); NARR, Manfred, D-7012 Fellbach 4 (DE)
(86) Internationale Anmeldenummer: DE8900534
(87) Internationale Veröffentlichungsnummer: WO9002875

(56) Entgegenhaltungen:
- DE-A- 3 141 850
- DE-A- 3 644 595
- DE-B- 1 019 128
- FR-A- 2 108 749
- GB-A- 744 293
- US-A- 2 792 846
- US-A- 3 773 440

## Beschreibung

### Stand der Technik

Die Erfindung geht von einem Druckventil nach der Gattung des Hauptanspruchs aus. Bei einem durch die DE-AS 1 236 863 bekannten Druckventil ist der Rücksaugbund durch eine Ringnut von dem Bund getrennt, der wenigstens eine Ausnehmung, im vorliegenden Falle zwei, aufweist. Diese Ausnehmung ist als Anschliff ausgeführt und verbleibt in jeder Stellung des Schließgliedes des Druckventils innerhalb der Durchgangsbohrung. Das Schließglied hat eine kegelförmige Dichtfläche am pumpenarbeitsraumseitigen Ende und auf der Federraumseite einen festen Anschlag, an den es bei einer sehr weich ausgeführten Druckfeder mit jedem Öffnungshub des Schließgliedes zur Anlage kommt. Die am Schließglied vorgesehene Ausnehmung, die somit immer einen konstanten Druchströmquerschnitt aufweist, ist als Drosselquerschnitt ausgebildet. Die Aufgabe dieses Drosselquerschnitts ist es, daß das Druckventilschließglied am Ende der Einspritzung nach Schließen der Einspritzdüse schneller in seine Schließstellung bewegt wird, da die in der Förderleitung reflektierten Druckwellen am Drosselquerschnitt einen Durchströmwiderstand finden, der sich als Schließkraft auf das Schließglied in Unterstützung der Druckfeder auswirkt. Aufgrund der unterschiedlichen Förderraten bzw. Fördergeschwindigkeit des Brennstoffs durch das Druckventil bzw. die Förderleitung bei Leerlaufbetrieb einerseits und Vollastbetrieb bei hoher Drehzahl andererseits ergibt sich, daß die Auswirkung der Drosselstelle auf die Schließbewegung des Schließgliedes in Richtung Leerlaufbetrieb abnimmt, da die Druckwelle verhältnismäßig schwach ausgebildet ist, der Drosselquerschnitt dieser Druckwelle also einen geringeren Widerstand entgegensetzt und über die Zeiteinheit mehr Kraftstoff durch die Drossel abfließen kann. Dementsprechend wird das Schließglied langsamer geschlossen und es wird demgemäß bei Leerlaufbetrieb ein größerer Anteil des durch das schließende Ventil freigegebenen Volumens der Förderleitung durch Kraftstoff aus dem Pumpenarbeitsraum ersetzt als dies bei Vollast- oder Teillastbetrieb der Fall ist, so daß sich die Druckminderung in der Förderleitung von einem geringsten Betrag bei Leerlaufbetrieb bis zu einem größten Betrag bei Vollastbetrieb verändert.

Ein solches Druckventil dient somit der Steuerung des Restdruckes in der Förderleitung und Angleichung der Kraftstoffördermenge in Abhängigkeit von der Einspritzmenge und der Drehzahl. Die beim Absteuerstoß wirksame Drossel wirkt sich zugleich während der Förderphase der Kraftstoffeinpritzpumpe auf die Einspritzrate aus und verringert die Kraftstoffeinspritzmenge bei Vollast mit zunehmender Drehzahl.

Bei durch die DE-A1-36 44 595 bekannten gattungs bildenden Druckventilen, bei denen das Schließglied einen Rücksaugbund aufweist und nicht bei jedem Fördervorgang an einen festen Anschlag laufen, ist der dem Rücksaugbund pumpenarbeitsraumseitig sich anschließende, vom Schließglied freigelassene Durchgangsquerschnitt in der Durchgangsbohrung sehr groß ausgeführt, insbesondere größer als der freie Querschnitt der sich anschließenden Förderleitung. Bei solchen Ventilen geben sich stark unterschiedliche Einspritzmengen bei konstant eingestellter Hochdruckförderung der Kraftstoffeinspritzpumpe. Diese unterschiedlichen Kraftstoffeinspritzmengen können insbesondere bei einer Verteilereinspritzpumpe nicht durch entsprechende Einstellung des wirksamen Förderhubes des Pumpenkolbens korrigiert werden, da alle Einspritzstellen der Brennkraftmaschine von einem einzigen Pumpenarbeitsraum im Wechsel versorgt werden und dementsprechend die Mengensteuerung für alle Einspritzstellen gleich sein muß, vorausgesetzt, daß nicht eine Einspritzmengensteuereinrichtung verwirklicht wird, die die Einspritzmenge pro Fördertakt des Pumpenkolbens individuell steuert. Eine solche Steuerung ist jedoch mit einem erheblichen Aufwand verbunden. Eine Mengenbeeinflussung kann auch durch andere sekundäre Maßnahmen vorgenommen werden, wie z. B. Hubbegrenzungen des Druckventils, was aber wiederum nicht den über den gesamten Betriebsbereich der Kraftstoffeinspritzpumpe erwünschten gleichmäßigen Effekt ergibt und zudem ebenfalls sehr aufwendig ist.

### Vorteile der Erfindung

Das erfindungsgemäße Druckventil mit den kennzeichnenden Merkmalen des Hauptanspruchs hat demgegenüber den Vorteil, daß die vorerwähnten Mengenstreuungen mit einer einfachen Maßnahme verhindert werden können. Insbesondere wird dabei das Öffnungsverhalten des Druckventilschließgliedes beeinflußt. Bei einem Druckventilschließglied, das in bekannter Weise den Rücksaugbund und einen sich anschließenden sehr großen Durchtrittsquerschnitt pumpenarbeitsraumseitig aufweist, wird mit dem Austauchen des Rücksaugbundes aus dem Durchgangskanal ein ringförmiger Verbindungsquerschnitt aufgesteuert, der bei wenigen Zehntel Millimetern des Austauchhubes bereits einen Querschnitt freigibt, der größer ist als der freie Querschnitt der sich anschließenden Förderleitung. Durch den Öffnungsvorgang ergibt sich daraus ein Überschwingen des Öffnungshubes in Richtung eines größeren Verbindungsquerschnittes als es für die Förderung der derzeit bestehenden Förderrate notwendig wäre. Anschließend schwingt aufgrund des Druckaufbaues in der Förderleitung das Druckventil wieder zurück und unterbindet die Förderung solange bis es wieder aufgestoßen wird. Aufgrund dieses Schwingvorganges ergeben sich Einbrüche in der Fördercharakteristik über die Förderdauer des jeweiligen Förderhubes des Pumpenkolbens bzw. über die Einspritzdauer. Je nach Auslegung der Förderstrecke an den einzelnen Einspritzstellen ergeben sich hieraus unterschiedliche Mengenverteilungen und zudem auch unterschiedlich, gewellte Mengenverläufe mit wechselnder Förderrate über der Drehzahl, was zu Beanstandungen führt. In der erfindungsgemäßen Ausgestaltung wird das Überschwingen dadurch vermieden, daß der Verbindungsquerschnitt zwischen Pumpenarbeitsraum und Förderleitung langsamer und mit zunehmender Förderrate kontinuierlich geöffnet wird, so daß bei der Förderung Druckspitzen und Drucksenkungen vermieden werden, die beim Druckventil gemäß dem Stand der Technik zu dem welligen Mengenverlauf geführt haben. Dabei stellt die Ausnehmung insgesamt keinen Drosselquerschnitt dar, da der freie Durchschnittsquerschnitt mit zunehmender Förderrate vergrößert werden kann und gemäß Patentanspruch 2 der Durchgangsquerschnitt und damit der maximale Verbindungsquerschnitt ungefähr gleich groß ist wie der freie Querschnitt der Förderleitung.

In vorteilhafter Weise ist nur eine einzige Ausnehmung am Steuerbund vorgesehen und diese Ausnehmung möglichst kompakt gestaltet, also mit möglichst kleiner Umfangsfläche bezogen auf die Querschnittsfläche. Damit wird eine Drosselwirkung der Ausnehmung vermieden, was sonst zu einer drehzahlabhängigen oder förderratenabhängigen Beeinflussung der Einspritzmenge führen würde. In einfacher vorteilhafter Ausgestaltung wird die Ausnehmung gemaß Anspruch 5 ausgeführt, dabei ergibt sich gemäß Anspruch 6 eine vorteilhafte Fertigungsmöglichkeit. In einer vorteilhaften Weiterbildung gemäß Anspruch 8 läßt sich zusätzlich eine gezielte Beeinflussung durch gestufte Querschnitte der Ausnehmung erzielen. Insbesondere kann auf diese Weise zusätzlich eine gezielte Angleichung erreicht werden.

Besonders einfach läßt sich ein Druckventil-Schließglied nach Anspruch 9 fertigen.

### Zeichnung

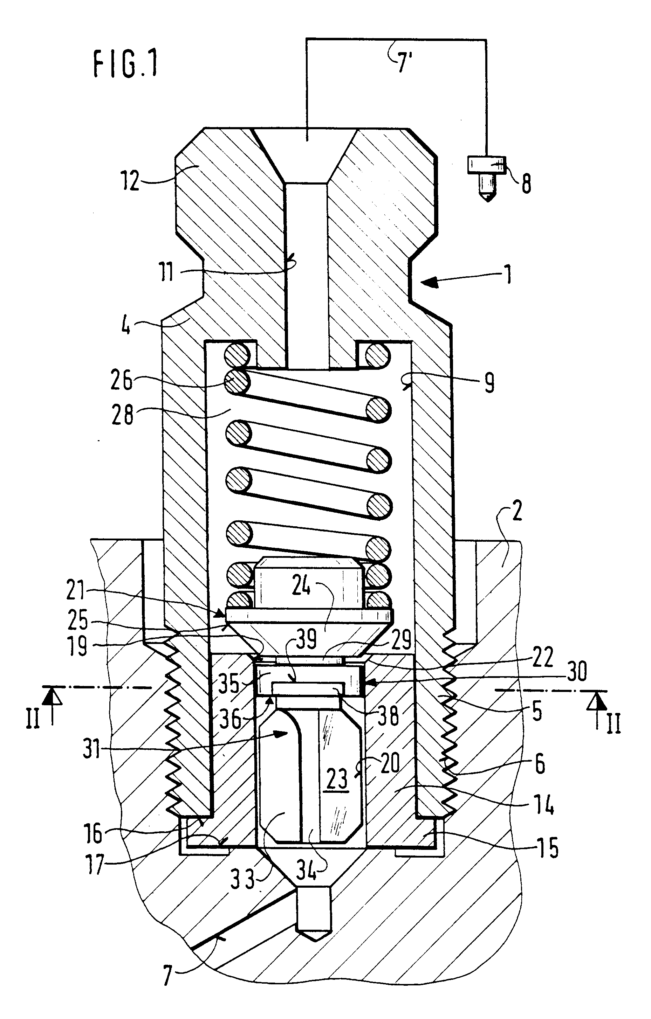

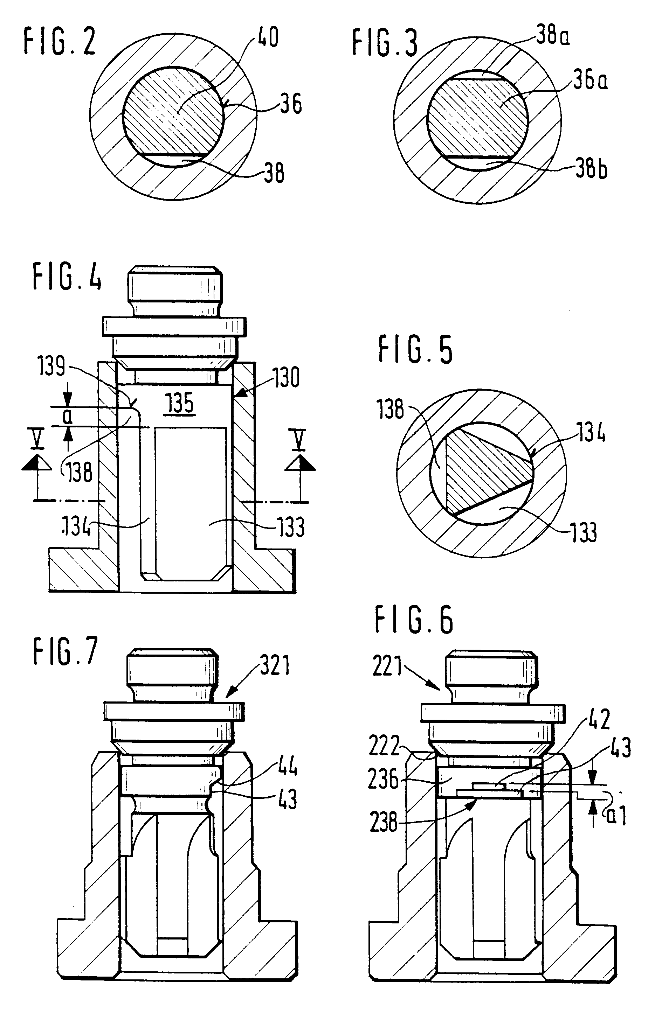

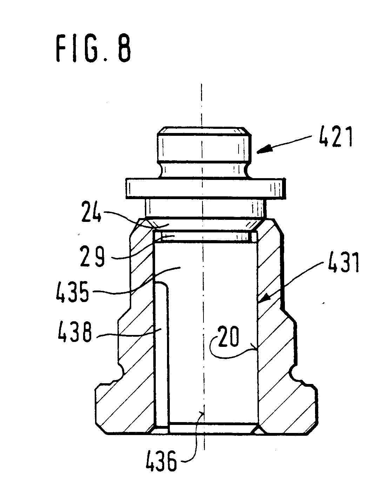

Sechs Ausführungsbeispiele der Erfindung sind in der Zeichnung dargestellt und werden in der nachfolgenden Beschreibung näher erläutert. Es zeigen Figur 1 ein erstes Ausführungsbeispiel, Figur 2 einen Schnitt entlang der Linie II durch das erste Ausführungsbeispiel des Druckventils, Figur 3 einen Schnitt analog zur Figur 2 durch ein zweites Ausführungsbeispiel des Druckventils, Figur 4 ein drittes Ausführungsbeispiel, Figur 5 einen Schnitt entlang der Linie V-V durch das Ausführungsbeispiel nach Figur 4, Figur 6 ein viertes Ausführungsbeispiel mit einem gestuften Anschliff, Figur 7 ein fünftes Ausführungsbeispiel mit sich kontinuierlich zur Pumpenarbeitsraumseite vergrößernden Querschnitt der Ausnehmung und Figur 8 ein sechstes Ausführungsbeispiel mit einem zylindrischen Führungsteil am Schließglied des Druckventils.

### Beschreibung der Ausführungsbeispiele

Die Figur zeigt einen Längsschnitt durch ein Druckventil 1, das in das Gehäuse 2 einer nicht weiter dargestellten Kraftstoffeinspritzpumpe eingeschraubt ist, die beispielsweise gemäß DE-OS 36 44 595 aufgebaut ist. Das Druckventil 1 weist einen Anschlußstutzen 4 auf, der an seinem einen Ende ein Außengewinde 5 hat und mit diesem in eine Gewindebohrung 6 im Gehäuse 2 eingeschraubt ist. Koaxial mündet in die Gewindebohrung vom nicht weiter dargestellten Pumpenarbeitsraum der Kraftstoffeinspritzpumpe her eine Förderleitung 7. Diese hat über das Druckventil 1 eine Verbindung zu einer weiterführenden Förderleitung 7', an deren Ende ein Einspritzventil 8 angeschlossen ist. Der Anschlußstutzen 4 ist im wesentlichen zylindrisch aufgebaut und hat eine axiale zylindrische Ausnehmung 9, die zur Einschraubseite hin offen ist. Koaxial zur zylindrischen Ausnehmung 9 geht von dieser eine Anschlußbohrung 11 ab, die in einem Anschlußnippel 12 des Anschlußstutzens mündet und die Ausnehmung 9 mit der Förderleitung 7' bzw. dem Einspritzventil 8 verbindet.

Vom pumpenarbeitsraumseitigen Ende her ist in die axiale Ausnehmung 9 ein rohrförmiger Ventilsitzkörper 14 eingesetzt, der an seinem pumpenarbeitsraumseitigen Ende einen Flansch 15 aufweist, über den er durch die pumpenarbeitsraumseitige Stirnseite 16 des Anschlußstutzens an einer Schulter 17 am Grund der Gewindebohrung 6 gehalten wird. Der Ventilsitzkörper 14 hat einen axialen Durchgangskanal 20, der an seinem Austritt zur Seite der Ausnehmung 9 eine Austrittskante 22 bildet, die in einen kegelförmigen Ventilsitz 19 übergeht. In den Durchgangskanal wird ein Ventilschließglied 21 des Druckventils geführt, das einen Kopf 24 aufweist, der eine kegelförmige Dichtfläche 25 hat, die bei Eintauchen des Ventilschließgliedes in den Durchgangskanal 20 zur Anlage an den Ventilsitz kommt. Der Kopf 24 des Ventilschließgliedes wird von der Kraft einer Druckfeder 26 beaufschlagt, die sich an der Strinseite der Ausnehmung 9 abstützt und bestrebt ist, das Ventilschließglied in Schließstellung bzw. Anlage am Ventilsitz zu halten. Der Kopf des Ventilschließgliedes zusammen mit dem Ventilsitzkörper schließen somit in der Ausnehmung 9 einen Federraum 28 ein. Der Ventilsitz kann aber auch am pumpenarbeitsraumseitigen Ende des Durchgangskanals 20 angeordnet sein, wobei dann die Dichtflächen an dem entsprechenden Ende des Ventilglieds ausgebildet ist.

Die Dichtfläche 25 am Kopf des Ventilschließgliedes wird pumpenarbeitsraumseitig durch eine Ringnut 29 begrenzt, die andererseits an einem Bund 30 angrenzt. Dieser ist der Bohrung des Durchgangskanals im Durchmesser so angepaßt, daß er im Durchgangskanal dichtbleibend verschiebbar ist. An den Bund schließt sich pumpenarbeitsraumseitig ein Führungsteil 31 an, der durch Aussparungen 33 gebildete Führungsrippen 34 aufweist, die in dem Durchgangskanal 20 gleiten und eine kippfreie Bewegung des Ventilschließgliedes gewährleisten. Zwischen den Führungsrippen bilden die Aussparungen Durchlaßquerschnitte für Kraftstoff, der über die Förderleitung 7 in den Durchgangskanal 20 zum Bund 30 gelangt.

Der Bund 30 wird regelmäßig als Rücksaugbund oder als Entlastungsbund bezeichnet und soweit bisher beschrieben entspricht das Ventilschließglied dem eines bekannten Druckventils mit Rücksaugbund. Erfolgt vom Pumpenarbeitsraum her eine Hochdruckförderung, so wird der Querschnitt des Ventilschließgliedes 21 von dem Hochdruck beaufschlagt und das Ventilschließglied entgegen der Kraft der Druckfeder 26 verschoben. Dabei taucht der Bund 30 aus dem Durchgangskanal 20 aus und verdrängt zugleich bereits Kraftstoff in die Förderleitung 7' unter Erhöhung des dort herrschenden Restdruckes vor dem Einspritzventil 8. Bei Überschreiten eines bestimmten, durch den Öffnungsdruck des Einspritzventils gegebenen Druckes folgt die Kraftstoffeinspritzung. Bei ausgetauchtem Bund 30 kann der Kraftstoff an einem ringförmig gebildeten Vebindungsquerschnitt vorbei in den Federrraum 28 und weiter zum Einspritzventil strömen. Bei Beendigung der Einspritzphase wird der Druck im Pumpenarbeitsraum abgesenkt. Dabei kehrt das Schließglied 21 unter Einwirkung der Druckfeder einerseits und dem in der Förderleitung 7' bzw. im Federraum 28 herrschenden Druck in seine Schließstellung zurück. Dabei taucht der Bund 30 an der Austrittskante 22 vorbei in den Durchgangskanal 20 ein und vergrößert dabei den ab dem Überdecken des ersten pumpenarbeitsraumseitigen Teils des Bundes 30 mit der Austrittskante 22 das zwischen Druckventilschließglied und Einspritzventil dann eingesperrte Volumen unter gleichzeitiger Druckentlastung. Diese Arbeitsweise ist bekannt und braucht hier nicht näher beschrieben werden.

Abweichend von der üblichen Gestaltung solcher Druckventile ist nun der Bund 30 unterteilt in einen Rücksaugbund 35 und einen Steuerbund 36. Der Steuerbund weist an seinem Umfang eine Ausnehmung 38 auf inform eines Anschliffes, deren zum Kopf 24 weisende Begrenzungskante parallel zur Austrittskante 22 liegt und die Höhe des Steuerbundes 36 bestimmt. Im übrigen geht der Steuerbund 36 nahtlos in den Rücksaugbund 35 über.

In Figur 2 ist die Ausnehmung 38 im Schnitt dargestellt. Sie kann, wie dort gezeigt, ein gerader Anschliff sein oder auch Anschliff mit kreisförmiger Begrenzungsfläche parallel zur Achse 40 des Ventilschließglieds hin sein. Die Ausnehmung 38 bildet einen Durchgangsquerschnitt, der kompakt ausgebildet ist durch einseitige Anbringung der Ausnehmung 38 am Steuerbund 36. Außer einem Anschliff sind auch andere kompakte Ausnehmungsformen, die zusammen mit der Wand des Durchgangskanals 20 einen Durchgangsquerschnitt bilden, möglich.

Bei dem hier beschriebenen Druckventil wird der Verbindungsquerschnitt zwischen der Förderleitung 7 und Förderleitung 7' durch den Austauchgrad des Steuerbundes 36 aus dem Durchgangskanal 20 bestimmt. Bei Anheben des Schließgliedes gibt die Austrittskante 22 zunehmend einen Verbindungsquerschnitt frei, der aus dem Produkt von Austauchhub und der Länge der durchgangskanalseitigen Begrenzung der Ausnehmung 38 bestimmt ist. Beim Öffnen des Druckventils wird somit mit einem durch den Durchgangsquerschnitt 38 beeinflußten Hub der zur ungehinderten Förderung notwendige Verbindungsquerschnitt zwischen den Förderleitungsabschnitten 7 und 7' hergestellt. Der Durchlaßquerschnitt, der zwischen Ausnehmung und Durchgangskanal 20 gebildet wird, ist so klein wie möglich aber so groß, daß der Kraftstoff bei der höchsten Förderrate so ungehindert durchfließen kann, wie das auch bei der entsprechenden dimensionierten Förderleitung der Fall ist. Das bedeutet, daß der maximale Durchgangsquerschnitt am Steuerbund etwa gleich groß ist wie der Durchtrittsquerschnitt der Förderleitung 7'. Dabei muß das Druckventilschließglied einen höheren Hub zurücklegen als dies beim eingangs diskutierten Stand der Technik erforderlich war. Die Höhe des Steuerbundes ist so bemessen, daß ein Teil desselben ständig innerhalb des Durchgangskanals 20 verbleibt und somit sicher ein gewünschter maximale Durchgangsquerschnitt erhalten bleibt. Durch die erfindungsgemäße Ausgestaltung wird somit gewährleistet, daß die höchste Kraftstoffeinspritzmenge ungehindert zur Einspritzstelle gelangt und daß der Verbindungsquerschnitt der jeweilig herrschenden Förderrate so angepaßt ist, daß ein Überschwingen der eingangs beschriebenen Art vermieden wird. Durch die zur Steuerung des Durchgangsquerschnitt notwendigen relativ großen Hübe wirkt sich ein leichtes Pendeln des Druckventilschließgliedes nicht mehr wesentlich auf die Kraftstoffeinspritzmenge bzw. den Einspritzmengenverlauf aus.

In einer weiteren Ausgestaltung gemäß Figur 3 ist der Steuerbund 36a mit zwei Ausnehmuhngen 38a oder 38b versehen, die einander diametral gegenüberliegen. Dies führt zwar von der Kompaktheit des Durchgangsquerschnitts weg, begünstigt jedoch die Gleichbelastung des Druckventilschließgliedes.

In einer dritten Ausgestaltung gemäß Figur 4 weist das Druckventilschließglied 121 nur drei Führungsrippen 134 auf, die im Winkelabstand von 120 Grad zueinander angeordnet sind. Die Aussparungen 133, wie aus Figur 5 entnehmbar sind als Anschliffe an einem ansonsten kreiszylindrischen Formkörper ausgestaltet, wobei mit dem Anschliff 133 zugleich auch der Bund 130 pumpenarbeitsraumseitig begrenzt wird. Auf der einen Seite ist der Anschliff jedoch um den Betrag a näher zur Seite des Kopfes des Ventilschließgliedes hin ausgeführt, wobei die ventilsitzseitige Begrenzungskante 139 den Rücksaugbund 135 in seiner Höhe festlegt. Über die pumpenarbeitsraumseitige Länge a wird durch diesen Anschliff die Ausnehmung 138 gebildet.

Bei einem vierten Ausführungsbeispiel gemäß Figur 6 ist die Ausnehmung 238 gestuft ausgeführt derart, daß zunächst ein kleinerer Durchtrittsquerschnitt 42 beim Überfahren der Austrittskante 222 über eine bestimmte Hublänge al zunehmend aufgesteuert wird, dem dann ein größerer Durchgangsquerschnitt 43 folgt, der im weiteren Verlauf des Öffnungshubes des Ventilschließgliedes 221 durch die Austrittskante 222 aufgesteuert wird. Hier kann man bei bestimmtem Bedarf dem Anschliff zusätzlich eine für sich bekannte drehzahlabhängig wirksame Ausgleichnut vorschalten und damit bei bestimmten konstruktiven Gegebenheiten der Einspritzanlage die Einspritzung im Bezug auf einen gleichmäßigen Einspritzverlauf anpassen. In Figur 6 wurde dies mit verschieden tiefen Anschliffen am Steuerbund 236 erzielt.

Statt der gestuften Ausführung mit Anschliff 42 gemäß Figur 6 kann gemäß Figur 7 auch ein schräger Anschliff 44 verwirklicht werden, mit dem es möglich ist kontinuierlich mit zunehmendem Auslenkhub des Druckventilschließgliedes 321 in Öffnungsrichtung eine zunehmende Öffnungsrate des Verbindungsquerschnittes zu erzielen und zugleich auch eine entsprechende drehzahlabhängig wirksame Angleichung zu erzielen.

In Figur 8 ist eine sechste Ausführungsform des Druckventils gezeigt. Hier wird in Weiterbildung zu Figur 4 das Druckventilschließglied 421 so ausgebildet, daß auf die die Führungsrippen 134 bildenden Aussparungen 133 verzichtet wird, so daß der Führungsteil 431 nun ein in der Durchgangsbohrung 20 dicht gleitendes, zylindrisches Teil ist, das gegenüber der Dichtfläche 25 durch die Ringnut 29 abgegrenzt ist. An diesen Führungsteil ist zur Seite der Dichtfläche 25 hin der Rücksaugbund 435 ausgebildet, an dem sich eine Ausnehmung 438 in Form eines zur Achse des Druckventilschließglieds parallelen Anschliff anschließt. Der Anschliff erstreckt sich auf den Rest der Länge des Führungsteils und hat die Funktion der Ausnehmung 138 von Figur 4 bzw. der Ausnehmung 38 von Figur 1. Dieser Teil des Führungsteils 431 ist somit zugleich der Steuerbund 436. Ein solches Ventilschließglied läßt sich besonders einfach herstellen.

## Patentansprüche

1. Druckventil zum Einbau in eine Förderleitung (7, 7') zwischen einem Pumpenarbeitsraum einer Kraftstoffeinspritzpumpe und einer Kraftstoffeinspritzstelle (8) an einer von der Kraftstoffeinspritzpumpe versorgten Brennkraftmaschine mit einem mit einem Ventilsitz (19) versehenen Ventilsitzkörper (14), der einen Durchgangskanal (20) aufweist, in dem ein Schließglied (21) des Druckventils (1) geführt ist, das eine Dichtfläche (25) aufweist, mit der es bei Schließstellung des Druckventils auf den sich an den Durchgangskanal (20) anschließenden Ventilsitz (19) durch eine sich ortsfest in einem auf der dem Pumpenarbeitsraum abgewandten Seite des Schließglieds liegenden Federraum (28) abstützenden Druckfeder (26) gepreßt wird, das ferner einen Bund (35) hat, der dicht im Durchgangskanal (20) verschiebbar ist, bei in Schließstellung befindlichem Schließglied dort eingetaucht ist und beim Öffnen des Druckventils federraumseitig aus dem Durchgangskanal (20) austaucht und mit einem sich pumpenarbeitsraumseitig unmittelbar an den Bund (35) anschließenden Durchtrittsteil (36) mit einem an den Durchmesser des Durchgangskanals angepaßten Durchmesser an dessen Umfang wenigstens eine sich über die gesamte Länge des Durchtrittsteils erstreckende Ausnehmung (38) befindet, die mit der Wand des Durchgangskanals (20) einen Durchgangsquerschnitt bildet und die Ausnehmung (38) mit einer den Durchgangskanal (20) federraumseitig begrenzenden Austrittskante (22) zusammen einen Verbindungsquerschnitt zwischen Pumpenarbeitsraum und Förderleitung (7) bildet, dadurch gekennzeichnet, daß der Durchtrittsteil als Steuerbund (36) ausgebildet ist, der Durchgangsquerschnitt der Ausnehmung (38) ungefähr gleich groß ist wie der Querschnitt der Förderleitung (7) und die Rückstellkraft zusammen mit dem Durchgangsquerschnitt so abgestimmt ist, daß mit zunehmender Kraftstofförderrate der Verbindungsquerschnitt durch Verschiebung des Schließgliedes (21) entgegen der Kraft der Druckfeder (26) vergrößert wird, wobei der Verbindungsquerschnitt immer kleiner oder höchstens gleich groß bleibt wie der Durchgangsquerschnitt.

2. Druckventil nach Anspruch 1, dadurch gekennzeichnet, daß nur eine einzige Ausnehmung (38) am Steuerbund (36) vorgesehen ist mit einer kleinen Umfangsfläche bezogen auf die Querschnittsfläche.

3. Druckventil nach einem der vorstehenden Ansprüche, dadurch gekennzeichnet, daß bei maximaler Förderrate der Kraftstoffeinspritzpumpe immer ein Teil des Steuerbundes und der Länge der Ausnehmung (38) in dem Durchgangskanal (20) verbleibt.

4. Druckventil nach einem der vorstehenden Ansprüche 1 bis 3, dadurch gekennzeichnet daß das Schließglied einen federraumseitigen Kopf (24) aufweist, an dem eine vorzugsweise kegelförmig verlaufende Dichtfläche (25) ausgebildet ist, die auf einen entsprechend ausgebildeten Ventilsitz (19) federraumseitig am Austritt des Durchgangskanals (20) durch die Druckfeder (26) zur Anlage bringbar ist und an einem sich an die Dichtfläche (25) anschließenden in den Durchgangskanal (20) tauchenden Teil des Schließglieds der Rücksaugbund (35) und der Steuerbund ausgebildet sind, und dem Steuerbund sich pumpenarbeitsraumseitig ein Führungsteil (31) anschließt, gebildet aus sich in Achsrichtung des Durchgangskanals (20) erstreckenden Aussparungen (33) an der Mantelfläche des Schließgliedes (21), zwischen denen Führungsrippen (34) gebildet sind und von denen eine als Ausnehmung (138) ausgebildet sich über die Höhe des Steuerbunds erstreckt.

5. Druckventil nach Anspruch 2, dadurch gekennzeichnet, daß das Schließglied (421) einen federraumseitigen Kopf (24) aufweist, an dem eine zum Durchgangskanal (20) weisende, vorzugsweise kegelförmig verlaufende Dichtfläche (25) ausgebildet ist, die auf einen entsprechend ausgebildeten Ventilsitz (19) am federraumseitigen Austritt des Durchgangskanals (20) durch eine Druckfeder (26) zur Anlage bringbar ist und ein in den Durchgangskanal (20) tauchendes zylindrisches Teil (431) aufweist, das auf der der Dichtfläche (25) zugewandten Seite den Rücksaugbund (435) bildet und dessen andere, arbeitsraumseitig liegende Seite den Steuerbund (436) bildet, der zugleich Führungsteil des Schließglieds ist.

6. Druckventil nach Anspruch 1 bis 5, dadurch gekennzeichnet, daß die Ausnehmung als Anschliff ausgebildet ist.

7. Druckventil nach Anspruch 6, dadurch gekennzeichnet, daß die Ausnehmung mit in Richtung Pumpenarbeitsraum zunehmendem Durchgangsquerschnitt ausgebildet ist.

8. Druckventil nach Anspruch 6, dadurch gekennzeichnet, daß die Ausnehmung gestuft mit in Richtung Pumpenarbeitsraum zunehmendem Durchgangsquerschnitt ausgebildet ist.

## Claims

1. Delivery valve for installation in a delivery line (7, 7') between a pump working space of a fuel injection pump and a fuel injection point (8) on an internal combustion engine supplied by the fuel injection pump, having a valve seat body (14) which is provided with a valve seat (19) and has a through channel (20) in which is guided a closing element (21) of the delivery valve (1), which closing element has a sealing surface (25) with which, in the closed position of the delivery valve, it is pressed onto the valve seat (19) adjoining the through channel (20) by a compression spring (26) supported, in a fixed location in a spring space (28) situated on the side of the closing element remote from the pump working space, which furthermore has a collar (35), which can be displaced in leak-tight fashion in the through channel (20), is sunk in the latter when the closing element is in the closed position and, when the delivery valve opens, emerges from the through channel (20) on the spring-space side, and with [sic] a passage part (36) which directly adjoins the collar (35) on the pump working-space side and has a diameter matched to the diameter of the through channel and on the circumference of which there is at least one recess (38) which extends over the entire length of the passage part and, with the wall of the through channel (20), forms a cross-section of passage and, with an outlet edge (22) bounding the through channel (20) on the spring-space side, the recess (38) forms a connecting cross-section between the pump working space and the delivery line (7), characterised in that the passage part is designed as a control collar (36), the cross-section of passage of the recess (38) is approximately as large as the cross-section of the delivery line (7) and the restoring force is matched to the cross-section of the passage in such a way that, as the fuel delivery rate increases, the connecting cross-section is enlarged by displacement of the closing element (21) counter to the force of the compression spring (26), the connecting cross-section becoming increasingly smaller or at most remaining as large as the cross-section of passage.

2. Delivery valve according to Claim 1, characterised in that only a single recess (38) is provided on the control collar (36), with a small circumferential area in relation to the cross-sectional area.

3. Delivery valve according to one of the preceding claims, characterised in that, at the maximum delivery rate of the fuel injection pump, part of the control collar and of the length of the recess (38) always remains in the through channel (20).

4. Delivery valve according to one of preceding Claims 1 to 3, characterised in that the closing element has a spring-space-side head (24) on which is formed a preferably conical sealing surface (25) which can be brought to rest by the compression spring (26) on a correspondingly designed valve seat (19) on the spring-space side at the outlet of the through channel (20), and the suck-back collar (35) and the control collar are formed on a closing-element part which adjoins the sealing surface (25) and plunges into the through channel (20), and adjoining the control collar on the pump working-space side is a guiding part (31) formed by reliefs (33), extending in the axial direction of the through channel (20), on the lateral surface of the closing element (21), between which are formed guiding ribs (34) and of which one is designed as a recess (138) and extends over the height of the control collar.

5. Delivery valve according to Claim 2, characterised in that the closing element (421) has a spring-space-side head (24) on which is formed a sealing surface (25) which faces towards the through channel (20), is preferably conical and can be brought to rest by a compression spring (26) on a correspondingly designed valve seat (19) at the spring-space-side outlet of the through channel (20) and has a cylindrical part (431) which plunges into the through channel (20), at the end facing the sealing surface (25) forms the suck-back collar (435) and the other end of which, which is situated on the working-space side, forms the control collar (436), which is simultaneously the guiding part of the closing element.

6. Delivery valve according to Claim 1 to 5, characterised in that the recess is designed as a ground feature.

7. Delivery valve according to Claim 6, characterised in that the recess is designed with a cross-section of passage which increases in the direction of the pump working space.

8. Delivery valve according to Claim 6, characterised in that the recess is of stepped design with a cross-section of passage which increases in the direction of the pump working space.

## Revendications

1. Soupape de refoulement destinée à être montée sur une canalisation de refoulement (7, 7') entre une chambre de travail d'une pompe d'injection de carburant et un point d'injection de carburant (8) sur un moteur à combustion interne alimenté par la pompe d'injection de carburant, avec un corps de siège de soupape (14) muni d'un siège de soupape (19) et qui comporte un canal de passage (20) dans lequel est guidé un organe de fermeture (21) de la soupape de refoulement (1), organe qui comporte une surface d'étanchement (25) dans laquelle il est pressé dans la position de fermeture de la soupape de refoulement sur le siège de soupape (19) se raccordant au canal de passage (20), par un ressort de pression (26) prenant appui en un point fixe dans une chambre de ressort (28) se situant sur le côté de l'organe de fermeture opposé à la chambre de travail de la pompe, cet organe de fermeture ayant en outre un bandeau (35) qui est susceptible de se déplacer de façon étanche dans le canal de passage (20) dans lequel il est plongé lorsque l'organe de fermeture se trouve dans la position de fermeture, et dont il émerge, côté chambre de ressort, lors de l'ouverture de la soupape de refoulement, et avec une partie (36), se raccordant directement côté chambre de travail de la pompe au bandeau (35), avec un diamètre adapté au diamètre du canal de passage et à la périphérie de laquelle se trouve au moins un évidement (38) s'étendant sur toute la longueur de cette partie (36) et qui forme, avec la paroi du canal de passage (20) une section transversale de passage, tandis que l'évidement (38), conjointement avec une arête de sortie (22) délimitant le canal de passage (20) côté chambre de ressort, forme une section transversale de liaison entre la chambre de travail de la pompe et la canalisation de refoulement (7'), soupape de refoulement caractérisée en ce que, la partie de passage revêt la forme d'un bandeau de commande (36), en ce que la section transversale de passage de l'évidement (38) est à peu près de la même grandeur que la section transversale de la canalisation de refoulement (7') et l'effort de rappel est déterminé conjointement avec la section transversale de passage pour qu'avec le taux de refoulement de carburant croissant, la section transversale de liaison est augmentée par déplacement de l'organe de fermeture (21) contre l'action du ressort de pression (26), tandis que la section transversale de liaison reste toujours plus petite ou bien, au maximum de même grandeur que la section transversale de passage.

2. Soupape de refoulement selon la revendication 1, caractérisée en ce qu'il est seulement prévu un évidement unique (38) sur le bandeau de commande (36) avec une petite surface périphérique par rapport à la surface de section transversale.

3. Soupape de refoulement selon une des précédentes revendications, caractérisée en ce que pour un taux de refoulement maximal de la pompe d'injection de carburant, une partie du bandeau de commande et de la longueur de l'évidement (38) reste toujours dans le canal de passage (20).

4. Soupape de refoulement selon une des précédentes revendications 1 à 3, caractérisée en ce que l'organe de fermeture comporte côté chambre de ressort, une tête (24) sur laquelle est formée une surface d'étanchement (25) s'étendant, de préférence, sous forme de cône, qui est susceptible d'être amenée par le ressort de pression (26) en application sur un siège de soupape (19) conformé de façon correspondante côté chambre de ressort à la sortie du canal de passage (20), tandis que le bandeau de ré-aspiration (35) et le bandeau de commande (36) sont réalisés sur une partie de l'organe de fermeture se raccordant à la surface d'étanchement (25) et plongeant dans le canal de passage (20), et au bandeau de commande se raccorde, côté chambre de travail de la pompe, une partie de guidage (31), constituée par des évidements (33) s'étendant en direction axiale du canal de passage (20) sur la surface enveloppe de l'organe de fermeture (21), entre lesquels sont ménagées des nervures de guidage (34), tandis qu'un de ces évidements revêtant la forme d'un évidement (138) s'étend sur la hauteur du bandeau de commande.

5. Soupape de refoulement selon la revendication 2, caractérisée en ce que l'organe de commande (421) comporte côté chambre de ressort, une tête (24) sur laquelle est réalisée une surface d'étanchement (25) s'étendant, de préférence, en forme de cône et tournée vers le canal de passage (20), et qui est susceptible d'être amenée par un ressort de pression (26) en application sur un siège de soupape (19) conformé de façon correspondante sur la sortie côté chambre de ressort, du canal de passage (20), et l'organe de fermeture (421) comporte une partie cylindrique (431) plongeant dans le canal de passage (20) et qui forme sur son côté tourné vers la surface d'étanchement (25) le bandeau de ré-aspiration (435), tandis que son autre côté se situant vers la chambre de travail de la pompe, constitue le bandeau de commande (436) qui est en même temps la partie de guidage de l'organe de fermeture.

6. Soupape de refoulement selon les revendications 1 à 5, caractérisée en ce que l'évidement revêt la forme d'une coupe par meulage.

7. Soupape de refoulement, selon la revendication 6, caractérisée en ce que l'évidement est réalisé avec une section transversale de passage croissant en direction de la chambre de travail de la pompe.

8. Soupape de refoulement, selon la revendication 6, caractérisée en ce que l'évidement est réalisé de façon étagée avec une section transversale de passage croissant en direction de la chambre de travail de la pompe.
